# EUROPEAN PATENT APPLICATION

(11) **EP 2 031 124 A1**
(43) Date of publication of application: **04.03.2009**
(21) Application number: 07115000.7
(22) Date of filing: 27.08.2007
(51) Int. Cl.: D06M 15/263, D06M 15/53, D06M 23/00, C03C 17/34

(54) **Coating having low friction characteristics**

(71) Applicant: Nederlandse Organisatie voor Toegepast-Natuurwetenschappelijk Onderzoek TNO, 2628 VK Delft (NL)
(72) Inventor: Lenting, Hermanus Bernardus Maria, 7577 EW Oldenzaal (NL); Van Bommel, Kjeld Jacobus Cornelis, 5625 AG Eindhoven (NL); Van der Heide, Emile, 5709 PG Helmond (NL); Ten Cate, Aafke Tessa, 5231 PR 's-Hertogenbosch (NL)
(74) Representative: Hatzmann, Martin

(57) **Abstract**

Coating to be applied on a carrier surface having low friction characteristics when uploaded with lubricant, comprising a chemical compound being arranged to bind a lubricant which reduces friction when coated carrier is in moving contact with another body.

## Description

The invention refers to a coating for several applications, having low friction characteristics.

When an object is transferred while being in contact with another object, friction will occur. The level of friction, or the calculated friction coefficient upon measurement, depends on the operational conditions, the interacting surfaces (e.g. roughness, composition) of both objects and the environment. Lubricants may typically be applied to lower the friction between interacting surfaces while preventing wear at the same time. Such behavior is typically based on additives, frequently referred to as anti-wear additives or friction modifiers. In some cases, however, additives cannot form the required boundary layers and lubricant failure will occur.

One aspect of the present invention is to bind lubricants to a surface in a durable way, thus maintaining a lowered friction coefficient and prolonged friction conditions.

Another aspect of the invention is to induce low friction properties of such a coated object in a durable way at any desired time by adding the relevant lubricant to the object's surface interacting with the object's coating layer and thus realizing prolonged low friction characteristics. Additionally, reversible possibilities may be aimed by removing the lubricant (e.g. by evaporation, solvent extraction etc.) at any desired time.

It may be preferred to apply a coating on any object surface applying low friction characteristics to the object when such coating is uploaded with a suitable lubricant at the time such low friction characteristics are required. Preferably such coating may contain a chemical compound which has the ability to bind such suitable lubricant in a prolonged way under circumstances wherein the object is transferred while in contact with another object. A coating is preferred which has the characteristic to bind an agent which reduces friction when the coated carrier is in moving contact with another body. The chemical compound which has the ability to bind such suitable lubricant preferably may be either covalently or non-covalently bound to the object. In a preferred embodiment, this chemical compound is a polymer covalently bound to the object. The polymer may be a homopolymer or a copolymer such as a block copolymer. Moreover, combinations of polymers may be used in the coating.

The chemical compound may be of a hydrophilic or hydrophobic nature, depending on the lubricant to be used to reduce the friction level. As an example, when a more hydrophobic lubricant is used, e.g. a wax or certain hydrocarbons or carbohydrates, the chemical compound may be an alkanoate or other chemical with hydrophobic nature by preference. Any of a large variety of hydrophobic and hydrophilic polymers can be used as said chemical compound.

Suitable hydrophobic polymers are polymers such as, but not limited to polysiloxane, perfluoropolyether and other fluoropolymers, polystyrene, polyoxypropylene, polyvinylacetate, polyoxybutylene, polyisoprene, polybutadiene, polyvinylchloride, polyalkylacrylate, polyalkylmethacrylate,polyacrylonitrile, polypropylene, polyethylene, PTHF, polymethacrylates, polyacrylates, polysulfones, polyvinylethers, and poly(propylene oxide), and copolymers thereof.

Suitable hydrophilic polymers are polymers such as, but not limited to, polyoxazoline, polyethylene glycol, polyethylene oxide, polyvinylalcohol, polyvinylpyrrolidone, polyacrylamide, poly(meth)acrylic acid, polyethylene oxide-co-polypropyleneoxide block copolymers, poly(vinylether), poly(N,N-dialkylacrylamide), polyacrylic acid and other polyelectrolytes, polyacyl alkylene imine, polyhydroxyalkylacrylates such as (homo)polymers of hydroxyethyl methacrylate (HEMA), hydroxyethyl acrylate, and hydroxypropyl acrylate, polyols, and copolymeric mixtures of two or more of the above mentioned polymers, natural polymers such as polysaccharides and polypeptides, and copolymers thereof, and polyionic molecules such as polyallylammonium, polyethyleneimine, polyvinylbenzyltrimethylammonium, polyaniline, sulfonated polyaniline, polypyrrole, and polypyridinium, polythiophene-acetic acids, polystyrenesulfonic acids, polymers and copolymers of zwitterionic molecules, and salts.

Covalent bonding of the polymer to the material surface may be realized as described in applicant's earlier patent application WO 2007/021180. Thus, conventional wet-chemical techniques as well as techniques like chemical vapor deposition (CVD), plasma deposition, plasma assisted grafting or plasma polymerisation can be used.

In one preferred embodiment wet-chemical technique is used wherein the polymer material comprises at least one pendant reactive moiety per monomer. In another preferred embodiment, the pendant reactive moieties are carboxyl moieties, and said material surface is functionalised with one or more amine groups. Even more preferably, the polymeric material is a polyacrylic acid or a derivative thereof, and said material surface is functionalised with 3-aminopropyltriethoxysilane.

To enlarge the lubricant binding properties of said coating, the lubricant binding capacity of said polyacrylic acid may be boosted by connecting an additional polymer layer (either covalently or non-covalently). In a preferred embodiment said polyacrylic acid polymer is modified by reaction with either a hydrophobic or a hydrophilic polymer containing either primary or secondary amine moieties. As an example, but not limiting to, an amino-functionalised polyethylene glycol may be used for this purpose.

A coating may be preferred which is suitable to be applied on a carrier surface, having low friction characteristics when uploaded with lubricant, wherein the coating e.g. may comprise polyacrylic acid (PAA) or one of the chemical compounds mentioned before. PAA etc. surprisingly meets the requirements of the desired coating, viz. it is capable, due to adsorption, to retain a lubricant like water at its surface and neither does it moisten its user nor does it feel wet. Those two characteristics - remaining wet without feeling wet - make the coating very attractive for several purposes. Amongst others a fabric which has been coated with PAA could be used for sportswear, for ski runs with artificial snow, blankets for decubitus patients and other applications.

The coating according to the invention may be applied in the areas of textiles, e.g. in hospitals, care houses etc. (anti-decubitus), coatings in the industrial, leisure and transport sector, shoes, sportswear etc.

### EXAMPLES

### Example 1

In this example, a method of modifying a glass surface by covalent bonding thereto of, subsequently, an aminopropyltrimethoxysilane linker and a polyacrylic acid polymer is described.

The precleaned glass substrates were submerged in a fresh coating solution of 5% 3-aminopropyltrimethoxysilane in IsoPropylAlcohol and sonicated for 20 min in an ultrasonic bath. The substrates were thoroughly washed (3x) with water followed by drying for 1 hr in an oven at 60 °C. The thus functionalised substrates were dipped in a solution of polyacrylic acid (Mw 1080.000; Mn 135.000) in water (0.5 wt%) and dried in an oven at 100 °C under reduced pressure (<100 mbar) for 4 hours. The substrates were thoroughly washed (3x) with water to remove the physical-sorbed and not chemically bonded polyacrylic acid. Contact angle measurements of water on the coating surface showed an advancing contact angle of 70-80 degrees, whereas that of the pre-cleaned glass substrate is found to be in between 20 and 40 degrees depending on the cleaning method.

### Example 2

In this example, a method of modifying a glass surface by covalent bonding thereto of, subsequently, an aminopropyltrimethoxysilane linker, a polyacrylic acid polymer and amino functionalised polyethylene glycol (PEG 5000; Mw 5400; Mn 5000) is described.

Using the polyacrylic acid modified glass substrate prepared as described in example 1, the glass substrate was further dipped in a solution of 1% of monofunctionalised amino-PEG 5000 in water and dried in an oven at 120 °C under reduced pressure (<100 mbar) for 1 hour. The substrates were thoroughly washed (3x) with water to remove the physical-sorbed and not chemically bonded PEG 5000. Contact angle measurements of water on the coating surface showed an advancing contact angle of less than 20 degrees.

### Example 3

In this example the tribological assessment is done using the coated glass surfaces from examples 1 and 2.

Tribological assessment is done using a reciprocating pin-on-plate test setup. This configuration was realized on the commercially available tribometer PLINT TE67, for which a dedicated glass suppport unit was constructed.

Operational conditions:
All experiments were done at room temperature and in air. The humidity and the temperature of the laboratory varied between 20-40% RH and 19-22 °C respectively. Following the FIFA 08/05 - 01 test method "Determination of Skin/Surface Friction", in which Silicon Skin L7350 is selected as best skin substitute, this Silicone rubber is used for the tribological assessment.

Other conditions:
Track length was set to 40 mm for all experiments. Ten strokes were done per experiment (five from left to right and five from right to left). The maximum velocity during the track was 1, 10 or 62 mm/s. The normal load was applied by the mass of the specimen holder or by an additional dead weight to a resulting normal force of 29 and 98 kPa respectively.

Tests were performed both with and without demi-water as bonded lubricant. The first condition is referred to as with water, the second to dry conditions. The results are shown in figures 1 and 2 for the dry condition and figures 3 and 4 for the "with water" condition. The used term glass means the pre-cleaned glass substrate without coating whereas the terms +PAA and +PEG stands for the glass substrate with a coating of PAA (example 1) and PAA plus a second layer of PEG 5000 (example 2) respectively.

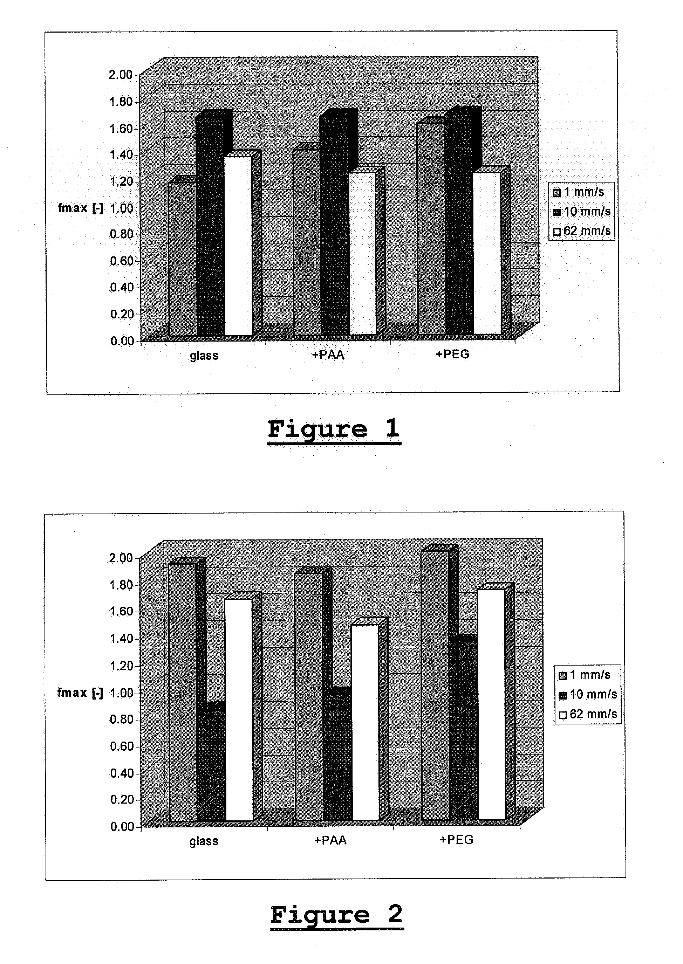

The coefficient of friction is calculated based on the friction force measured and normal force applied: µ = F_{w}/Fₙ
Figure 1 shows the maximum coefficient of friction, fmax, as a function of the sliding velocity and plate surface, at 98 kPa contact pressure and at dry condition.
Figure 2 shows the maximum coefficient of friction, fmax, as a function of the sliding velocity and plate surface, at 29 kPa contact pressure and at dry condition.

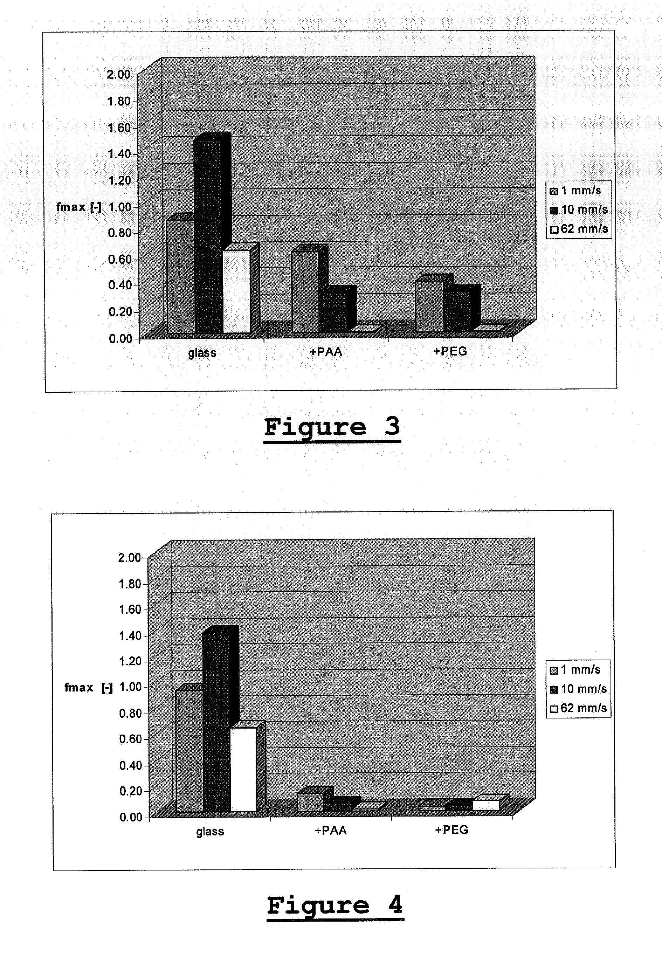

Figure 3 shows the maximum coefficient of friction, fmax, as a function of the sliding velocity and plate surface, at 98 kPa contact pressure with water.
Figure 4 shows the maximum coefficient of friction, fmax, as a function of the sliding velocity and plate surface, at 29 kPa contact pressure with water

From the figures 1-4 it can be observed that in the absence of lubricant the calculated maximum coefficients of friction are all above 0.7 no matter the diverse circumstances. On the contrary, in the presence of lubricant, there is a clear impact of the presence of the lubricant for the uncoated glass substrate and the synergistic performance of the coating polymer in cooperation with the lubricant. Especially in the situation wherein a normal pressure of 29 kPa is applied, a maximal synergistic performance is obtained, no matter the maximum velocity during the track.

## Claims

1. Coating to be applied on a carrier surface having low friction characteristics when uploaded with lubricant, comprising a chemical compound being arranged to bind a lubricant which reduces friction when the coated carrier is in moving contact with another body.

2. Coating according to claim 1, wherein the chemical compound is covalently bound to a carrier surface.

3. Coating according to claim 2, wherein the chemical compound is a polymer.

4. Coating according to claim 3, wherein the chemical compound comprises two covalently bound layers on top of each other.

5. Coating according to claim 3, wherein the chemical compound comprises a hydrophilic polymer which is selected from the group consisting of polyoxazoline, polyethylene glycol, polyethylene oxide, polyvinylalcohol, polyvinylpyrrolidone, polyacrylamide, poly(meth)acrylic acid, polyethylene oxide-co-polypropyleneoxide block copolymers, poly(vinylether), poly(N,N-dialkylacrylamide), polyacrylic acid and other polyelectrolytes, polyacyl alkylene imine, polyhydroxyalkylacrylates such as (homo)polymers of hydroxyethyl methacrylate (HEMA), hydroxyethyl acrylate, and hydroxypropyl acrylate, polyols, and copolymeric mixtures of two or more of the above mentioned polymers, natural polymers such as polysaccharides and polypeptides, and copolymers thereof, and polyionic molecules such as polyallylammonium, polyethyleneimine, polyvinylbenzyltrimethylammonium, polyaniline, sulfonated polyaniline, polypyrrole, and polypyridinium, polythiophene-acetic acids, polystyrenesulfonic acids, polymers and copolymers of zwitterionic molecules, and salts.

6. Coating according to claim 5, comprising any combination of two or more of said chemical compounds.

7. Coating according to claim 5, wherein the chemical compound comprises a polyacrylic acid.

8. Coating according to claim 7, wherein the chemical compound comprises a polyacrylic acid and an amine-group containing polyethylene glycol.

9. Coating according to claim 7, wherein the chemical compound comprises a polyacrylic acid and aminolated polyethylene glycol 5000.

10. Coating according to claim 2, wherein the chemical compound is a fatty acid and wherein the chain length varies from C3 to C25.

11. A coating according to claim 3, wherein the chemical compound comprises a hydrophobic polymer which is selected from the group consisting of polysiloxane, perfluoropolyether and other fluoropolymers, polystyrene, polyoxypropylene, polyvinylacetate, polyoxybutylene, polyisoprene, polybutadiene, polyvinylchloride, polyalkylacrylate, polyalkylmethacrylate,polyacrylonitrile, polypropylene, polyethylene, PTHF, polymethacrylates, polyacrylates, polysulfones, polyvinylethers, poly(propylene oxide), and copolymers thereof.

12. Coating according to claim 11, comprising any combination of two or more of said chemical compounds.

13. Coating according to claims 5 and 11, comprising any combination of two or more of said hydrophilic and/or hydrophobic chemical compounds.

14. Coating according to any of claims 5 or 6, wherein the bound lubricant is water.

15. Coating according to any of claims 10 or 11, wherein the bound lubricant is a hydrophobic compound.

16. Coating according to any of claims 10 or 11, wherein the bound lubricant has a hydrocarbon as backbone.

17. Coating according to any of claims 10 or 11, wherein the bound lubricant is a wax.

18. Carrier, comprising the coating according to any one of the preceding claims.

19. Use of the carrier according to claim 18 to reduce friction between the carrier and another object upon transfer of the carrier while in contact with the other object.

20. Textile material or products thereof comprising a carrier according to claim 18 and/or a coating according to any of claims 1 - 17.
